Europäisches Patentamt

European Patent Office

Office européen des brevets

(11) Publication number: **0 068 198**
**B1**

# (12) EUROPEAN PATENT SPECIFICATION

(45) Date of publication of patent specification: **11.12.85**

(21) Application number: **82105027.5**

(22) Date of filing: **08.06.82**

(51) Int. Cl.⁴: **G 02 B 6/26**

(54) Optical multiplexer/demultiplexer using interference filters.

(30) Priority: **12.06.81 JP 90253/81**

(43) Date of publication of application:
**05.01.83 Bulletin 83/01**

(45) Publication of the grant of the patent:
**11.12.85 Bulletin 85/50**

(84) Designated Contracting States:
**DE FR GB NL**

(56) References cited:
**ELECTRONICS LETTERS, vol.15, no.14, July 5,
1979, K. NOSU: "Multireflection optical
multi/Demultiplexer using interference filters",
pages 414-415
OPTICS LETTERS, vol.5, no.7, July 1980,
Optical Society of America, New York (US), E.
MIYAUCHI et al.: "Compact wavelength
multiplexer using optical-fiber pieces", pages
321-322
EDN MAGAZINE, vol.26, no.3, February 1981,
Boston, Mass. (US), T. ORMOND: "Wavelength
multiplex, demultiplex devices emerge from
fiber-optic research", pages 73-74**

(73) Proprietor: **NEC CORPORATION
33-1, Shiba 5-chome, Minato-ku
Tokyo 108 (JP)**

(72) Inventor: **Ishikawa, Shigeta
c/o Nippon Electric. Co., Ltd. 33-1, Shiba
Gochome
Minato-ku Tokyo (JP)**

(74) Representative: **Vossius Vossius Tauchner
Heunemann Rauh
Siebertstrasse 4 P.O. Box 86 07 67
D-8000 München 86 (DE)**

Courier Press, Leamington Spa, England.

## Description

The invention relates to an optical multiplexer/demultiplexer using interference filters.

With the recent development and implementation of fiber optic technology into practical transmission systems, a great deal of attention has been paid to a multiple carrier technique referred to as wavelength division multiplexing (WDM). With the WDM technique resorting to an optical multiplexer/demultiplexer, a plurality of input beams of radiant energy, each having a different preselected wavelength, is combined into a single beam containing said different wavelengths therein and, conversely, the single beam combined is separated into its constituent wavelengths. In general, such an optical multiplexer/demultiplexer may be composed of either interference filters or diffraction gratings. More specifically, the one using the former, though less steep in its penetrating wavelength characteristic than the one using the latter, can exhibit an excellent multiplexing capability over a wide range of wavelengths. Since the filter characteristics of the interference filter can be determined independently of the parameters of the fibers used, any optical fibers can be adapted to the multiplexer/demultiplexer.

An example of the optical multiplexer/demultiplexer outlined above is proposed by Kiyoshi Nosu et al. in a paper titled "Multi-reflection Optical Multi/Demultiplexer Using Interference Filters", published in the Electronics Letters, Vol. 15, No. 14, June 5, 1979, pp. 414—415.

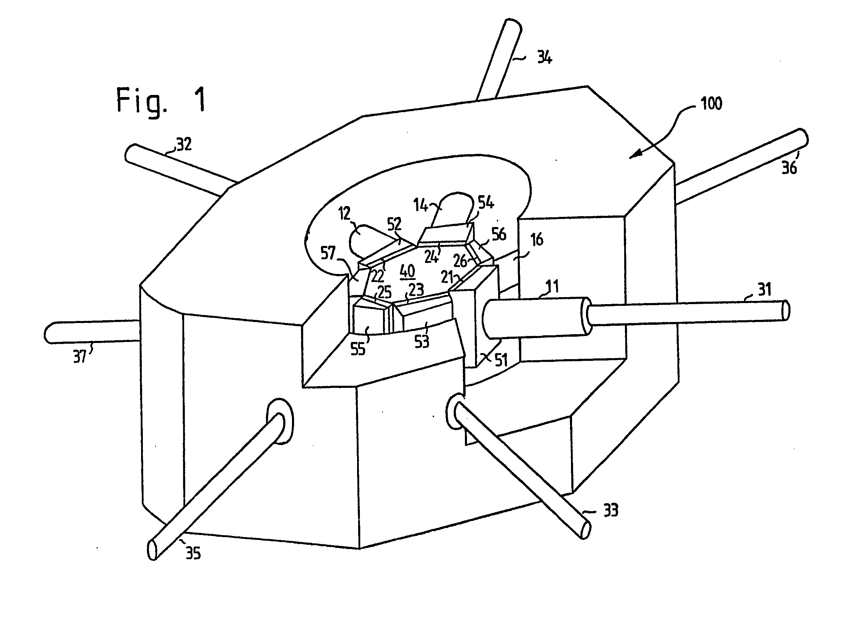

However, with the device proposed in Fig. 1 of the above paper an appreciable amount of insertion loss must be taken into consideration in practical use.

The insertion loss of the multiplexer/demultiplexer using a collimating lens system results from the absorption and scattering undergone during the propagation, and, the aberration of the lens. Both factors increase with increasing optical path length. The structure according to the above paper also causes a change in the insertion loss of the multiplexer/demultiplexer due to temperature variations since all the fibers are arranged on opposite sides of a relatively long glass body.

An object of the present invention, therefore, is to provide an optical multiplex/demultiplex device which is improved in insertion loss by adopting a new structure. This is accomplished by the features of the claims.

This invention will be described in greater detail in conjunction with the accompanying drawings, wherein:

Fig. 1 shows a perspective view of one embodiment of the invention;

Fig. 2 is a diagram for describing the operation of the embodiment;

Fig. 3 is a diagram illustrating the advantages of the embodiment.

In the drawings, like reference numerals denote like structual elements.

Referring to Fig. 1, one embodiment comprises: an optical energy transmissive body 40 such as a heptagonal prismatic bulk prism having seven side faces; interference filters 21 to 26 provided on six predetermined side faces of the body 40; lenses 11 to 17 for the convergence or collimation of incident beams of radiant energy, attached to the filters 21 through 26 and to the remaining one side face of the body 40, respectively; optical fibers 31 to 37 provided in one-to-one correspondence to said lenses for outputting the beams given from the lenses or for coupling given beams to said lenses; and spacers 51 to 57 for setting a predetermined incident angle A with respect to each of the seven side faces of the body 40. The filters 21 to 26, each having a multilayer structure of $SiO_2$ and $TiO_2$, are so designed as to pass only wavelengths $\lambda_1$, to $\lambda_6$, respectively. The structural elements 11 to 17, 21 to 26, 31 to 37, 40, and 51 to 57 are contained in a holder 100 formed of stainless steel.

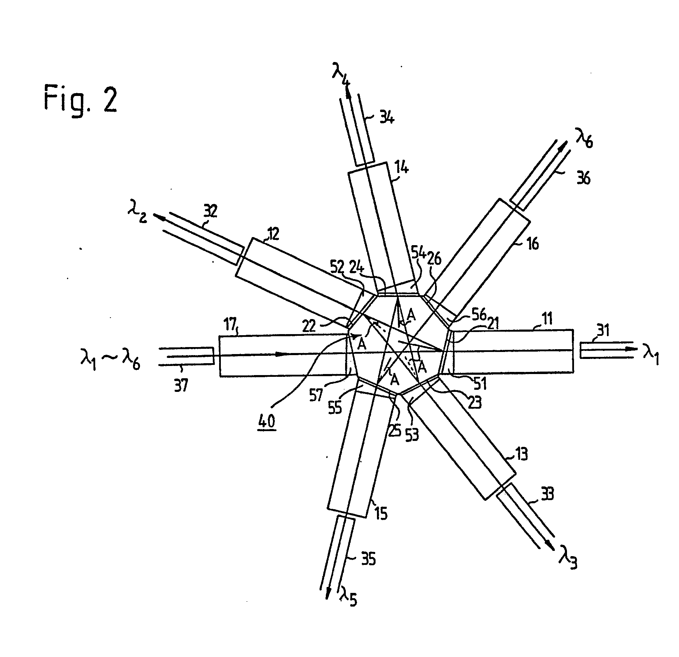

Next will be described in detail the demultiplexing operation of this embodiment with reference to Figs. 1 and 2. An input beam of radiant energy, provided by any suitable source such as a laser (not shown) and containing a plurality of wavelengths $\lambda_1$ to $\lambda_6$, is made incident from the optical fiber 37 onto the lens 17 and collimated therein. After being transmitted through the spacer 57 and the body 40, the collimated beam is supplied to the filter 21 for passing only a beam of $\lambda_1$. The beam of $\lambda_1$, after passing the filter 21, is converted by the lens 11 and coupled to the output fiber 31. On the other hand, the beam containing the wavelengths $\lambda_2$ to $\lambda_6$ is reflected by the filter 21, again transmitted through the body 40, and reach the next filter 22 for passing only a beam of $\lambda_2$. The beam of $\lambda_2$, after passing the filter 22, is converged by the lens 12 and coupled to the fiber 32. Also, the beam containing the wavelengths $\lambda_3$ to $\lambda_6$, is reflected by the filter 22, and, similarly, coupled through the lenses 13, 14, 15, and 16 for the beam convergence to the output fibers 33, 34, 35, and 36, respectively.

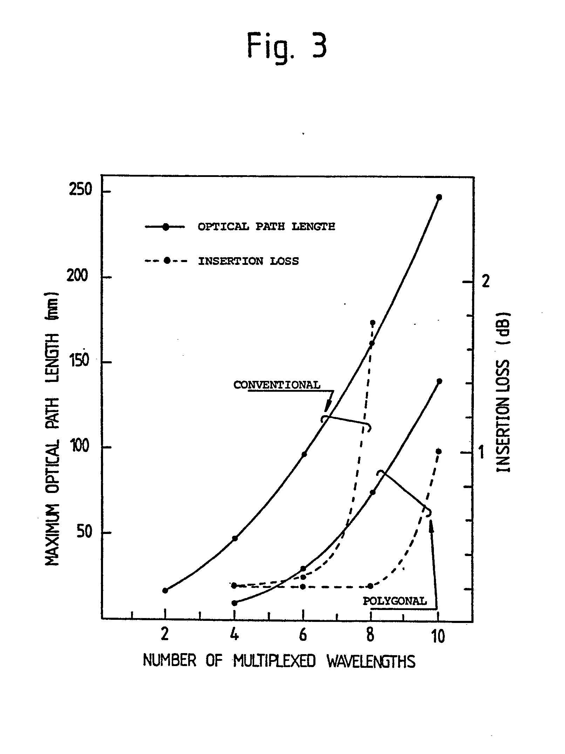

Figure 3 illustrates, in a comparison between a conventional multiplexer/demultiplexer and a polygonal multiplexer/demultiplexer according to the invention, the optical path length and insertion loss characteristics vs. the number of multiplexed wavelengths which is equivalent to the number N of the side faces of the polygon minus one in the present invention. The incident angles with respect to the interference filters of the side faces are set at 90°/N. The fiber distances in the shortest length between the adjacent fibers are fixed to 7 mm. The optical path lengths from the end of the input fiber to the end of the last output fiber are calculated and shown. The insertion losses caused by the aberration of a collimating lens system along the distance from the input fiber to the last fiber are measured and also shown.

The characteristics of the structure of a conventional multiplexer/demultiplexer having the same incident angles and the same fiber distances are also shown for comparison.

Generally speaking, the larger the incident angle to the interference filter and the smaller the adjacent fiber distances, the shorter the optical path length from the input (or output) fiber to the last output (or input) fiber is. However, a larger incident angle provides less steep filter characteristics, and a smaller fiber distance causes difficult assembling because there is not enough space for the fiber adjustment. Therefore, the comparison between the prior art and the present invention is made with respect to the same incident angle and the same adjacent fiber distance in the shortest length.

In the case of a six component multiplexing or demultiplexing the regular heptagonal prism is used in the present invention, and the fibers are so arranged that incident angles are 12.9 degrees and the fiber distances in the shortest length between adjacent fibers are 7 mm. As a result, the optical path lengths are reduced by about one-third, achieving a reduction of the insertion loss. The improvement on the insertion loss caused by the aberration of a collimating lens system is particularly important where more than seven wavelengths are demultiplexed or multiplexed.

Furthermore, as is evident from the structure shown in Fig. 1, since the structural elements (lenses, filters and fibers) are arranged radially from the center of the heptagonal prism, thermal expansion of those elements with the heptagonal prism does little affect the incident angle, avoiding the increase of the insertion loss.

The optical demultiplexer of Fig. 1, formed of the structural elements given in Table 1, has been found to have the wavelength-insertion loss relationship shown in Table 2.

TABLE 1

| Optical fibers | Graded-index type fibers |
|---|---|
| Light transmissive body | Heptagonal prism, each side measuring 2.5 mm in length and 4.5 mm in height |
| Spacers | Pieces of glass inclined at an angle A of 12.9° |
| Lenses | Graded-index rod lenses measuring 2 mm in diameter and 6 mm in length. |
| Interference filters | Each consisting of 25 alternate layers of $SiO_2$ and $Ti_2$ 4 mm (width)×2.3 mm (length)×0.2 mm (height) |

TABLE 2

| Wavelength (μm) | 1.1 | 1.2 | 1.3 | 1.4 | 1.5 | 1.6 |
|---|---|---|---|---|---|---|
| Insertion loss (dB) | 1.0 | 0.8 | 1.2 | 1.1 | 1.0 | 0.9 |

Whereas a heptagonal prism is used in this embodiment to form an optical demultiplexer suited for six wavelengths, the same heptagonal prism can be used to achieve an optical demultiplexer for any number of wavelengths between two and five inclusive.

Although the embodiment shown in Fig. 1 is described as a demultiplexer, the embodiment also operates as a multiplexer when the demultiplexer operation is reversed.

As hitherto described, the present invention can provide a highly reliable optical device, which can operate with extremely reduced insertion loss.

**Claims**

1. An optical multiplexer/demultiplexer for use in a wavelength division multiplexing system, comprising

a) a light transmission body (40) having opposing side faces,

b) a first optical port (37, 17) disposed at one of said side faces and having a collimating lens (17) and an optical fiber (37) for directing a single beam at a predetermined angle with respect to said predetermined side face into or out of said body (40) for the demultiplexing or multiplexing operation, said single beam containing M preselected wavelengths $(\lambda_1—\lambda_6)$,

c) a plurality of second optical ports (11—16), 31—36) disposed at the side faces of said body (40) for receiving or emanating said beam,

d) a plurality of interference filters (21—25) disposed between the side faces and the second optical ports for transmitting specific wavelengths of said beam and reflecting others,

characterized in that the light transmission body (40) is a polygon having an odd number N≧3 of side faces,

the optical ports (11—17, 31—37) being provided on each of the N side faces of the body (40).

2. Device according to claim 1, characterized in that an interference filter (26) for transmitting the beam is disposed at one of said side faces which is most apart in an optical path from the side face provided with the first optical port.

3. Device according to claim 2, characterized in that spacers (51—57) are provided between the lenses (11—17) of the optical ports and the interference filters (21—26), or the first predetermined side of the N side faces having no interference filter, respectively.

**Patentansprüche**

1. Optischer Multiplexer/Demultiplexer für ein Wellenlängenmultiplexsystem, mit

a) einem lichtdurchlässigen Körper (40) mit gegenüberliegenden Seitenflächen,

b) einer an einer der Seitenflächen angeordneten ersten optischen Öffnung (37,17) mit einer Kollimationslinse (17) und einer optischen Faser (37), durch die beim Demultiplex- oder Multiplexbetrieb ein einzelner Strahl unter einem bestimmten Winkel bezüglich der bestimmten Seitenfläche in den Körper (40) oder aus diesem heraus geführt wird, wobei der einzelne Strahl M vorgewählte Wellenlängen ($\lambda_1$—$\lambda_6$) enthält,

c) mehreren an den Seitenflächen des Körpers (40) angeordneten zweiten optischen Öffnungen (11—16, 31—36) zum Empfangen oder Aussenden des Strahls,

d) mehreren zwischen den Seitenflächen und den zweiten optischen Öffnungen angeordneten Interferenzfiltern (21—25), die spezifische Wellenlängen des Strahls durchlassen und andere Wellenlängen refektieren,

dadurch gekennzeichnet, daß der lichtdurchlässige Körper (40) ein Polygon mit einer ungeraden Zahl N≧3 von Seitenflächen ist, wobei die optischen Öffnungen (11—17, 31—37) auf jeder der N Seitenflächen des Körpers (40) vorgesehen sind.

2. Vorrichtung nach Anspruch 1, dadurch gekennzeichnet, daß ein Interferenzfilter (26) zum Durchlassen des Strahls an einer der Seitenflächen angeordnet ist, die im optischen Weg am weitesten von der die erste optische Öffnung aufweisenden Seitenfläche entfernt ist.

3. Vorrichtung nach Anspruch 2, dadurch gekennzeichnet, daß zwischen den Linsen (11—17) der optischen Öffnungen und den Interferenzfiltern (21—26) bzq. der kein Interferenzfilter aufweisenden ersten bestimmten Seite der N Seitenflächen Abstandstücke (51—57) vorgesehen sind.

**Revendications**

1. Multiplexeur/démultiplexeur optique pour emploi dans un système de multiplexage à division de longueurs d'onde, comprenant:

a) un corps (40) de transmission de la lumière ayant des faces latérales opposées;

b) un premier point optique d'accès (37, 17) disposé à l'une des faces latérales et comportant une lentille de collimation (17) et une fibre optique (37) pour diriger un faisceau unique suivant un angle prédéterminé par rapport à la face latérale prédéterminée pour qu'il entre dans le corps (40) ou en sorte pour l'opération de démultiplexage ou de multiplexage, ce faisceau unique contenant M longueurs d'onde présélectionnées ($\lambda_1$—$\lambda_6$);

c) une pluralité de seconds points optiques d'accès (11—16, 31—36) disposés aux faces latérales du corps (40) pour recevoir ou sortir le faisceau;

d) une multitude de filtres d'interférence (21—25) disposés entre les faces latérales et les seconds points optiques d'accès pour la transmission de longueurs d'onde spécifiques du faisceau et la réflexion d'autres,

caractérisé en ce que le corps (40) de transmission de la lumière est un polygône ayant un nombre impair N≧3 de faces latérales;

— les points optiques d'accès (11—17, 31—37) étant prévus sur chacune des N faces latérales du corps (40).

2. Dispositif selon la revendication 1, caractérisé en ce que le filtre (26) d'interférences pour transmettre le faisceau est disposé à l'une des faces latérales qui est la plus distante dans un trajet optique partant de la face latérale munie du premier point optique d'accès.

3. Dispositif selon la revendication 2, caractérisé en ce que des entretoises (51—57) sont prévues entre les lentilles (11—17) des points optiques d'accès et les filtres (21—26) d'interférences, ou le premier côté prédèterminé des N faces latérales n'ayant aucun filtre d'interférences, respectivement.

**Fig. 1**

Fig. 2

# Fig. 3